# EUROPEAN PATENT APPLICATION

(11) **EP 4 099 648 A1**
(43) Date of publication of application: **07.12.2022**
(21) Application number: 21748366.8
(22) Date of filing: 27.01.2021
(51) Int. Cl.: H04L 12/723, H04L 12/721, H04L 12/701

(54) **METHOD FOR PROCESSING SEGMENT ID, AND APPARATUS**

(30) Priority: 31.01.2020 CN 202010077720
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: CHENG, Weiqiang, Beijing 100032 (CN); LIU, Yisong, Beijing 100032 (CN); LI, Han, Beijing 100032 (CN); DUAN, Xiaodong, Beijing 100032 (CN)
(74) Representative: GPI Brevets
(86) International application number: PCT/CN2021/073952
(87) International publication number: WO 2021/151381

(57) **Abstract**

Embodiments of the present disclosure provide a method for processing a segment identifier and an apparatus. The method includes: assigning a globally unique index to a first node; and sending first information and/or second information of the first node to one or more second nodes in a network. The first information of the first node includes a locator of the first node and the corresponding index, and the second information of the first node includes a value of a function of the first node and the index.

## Description

### CROSS-REFERENCE TO RELATED APPLICATION

The present application claims a priority to the Chinese patent application No. 202010077720.3 filed in China on January 31, 2020, a disclosure of which is incorporated herein by reference in its entirety.

### TECHNICAL FIELD

Embodiments of the present disclosure relate to the field of communication technologies, in particular to a method for processing a segment identifier (ID) and an apparatus.

### BACKGROUND

Segment routing (SR) is a source routing technique based on the concept of software defined network (SDN) for building a path-connection-oriented network architecture, so as to satisfy the further networks' multi-layered demands for programmability, and is capable of meeting the connection requirements in the 5^{th} generation (5G) application scenarios with massive connectivity and slices.

The segment routing multi-protocol label switching (SR-MPLS) is an SR solution developed based on the current mainstream MPLS forwarding plane. The SRv6 is an SR solution developed as an expansion of the Internet protocol version 6 (IPv6). The SR-MPLS continues to use the MPLS forward mechanism, evolves naturally, and has seen widespread use in transmission networks. On the other hand, the SRv6 has further enhanced network programmability, and supports network and service programmability.

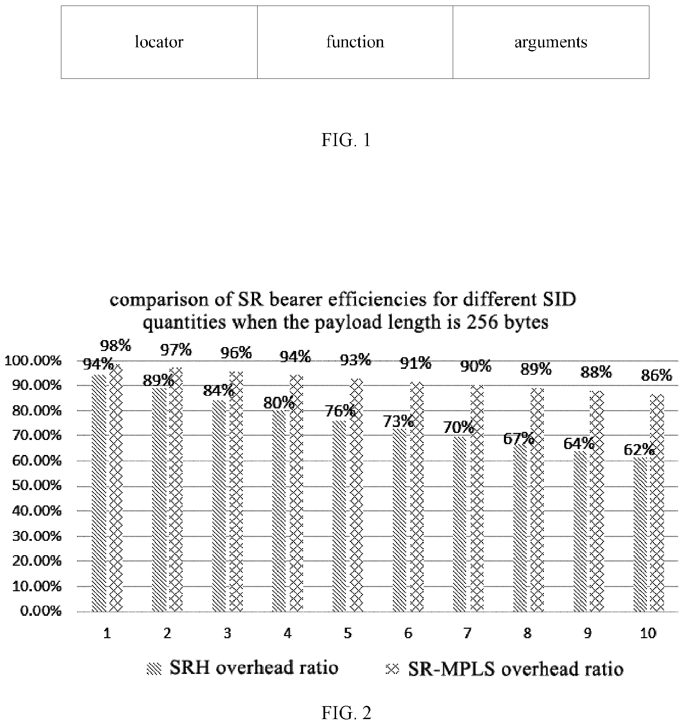

The current Internet Engineering Task Force (IETF) draft, namely, draft-ietf-6man-segment-routing-header-26, defines a segment routing header (SRH) of the IPv6 extension header for using in the SRv6 data plane forwarding. In the segment list of the SRH, each segment ID (SID) has 128 bits, and includes several parts such as locator, function and arguments, as shown in Fig. 1.
(1) Locator: the identifier assigned to a network node by the network, which can be used in routing and data packet forwarding. The locator has two important attributes: routable and aggregable. The locator in the SRv6 SID is variable in length, so as to be compatible with networks of different sizes.
(2) Function value: the identifier (ID) value assigned to a local forwarding instruction by the device, which can be used to indicate a forwarding operation to be performed by the device, and is equivalent to the operation code of a computer instruction. In SRv6 network programming, different forwarding behaviors are indicated by different respective function ID values. To some extent, the Function ID is similar to MPLS label, and is used to identify a virtual private network (VPN) forwarding instance, and the like.
(3) Arguments (Args): the parameters required in the execution of the forwarding instruction. The parameters may include information about flow, service or any other related variable information.

IPv6 is the principal technique for the new generation of network. In the long run, the SRv6 based on IPv6 would become the evolving trend of future networks. Research on the mechanism of SRv6 has been a hot topic in the industry.

Operator networks have high requirements on the quantity of layers of SR labels. Taking a 5G bearer network for example, with the centralized deployment of 5G core network, the traffic of a base station needs to go through a metropolitan area network (MAN) and an IP backbone network. In a typical scenario, in a MAN, an access ring has 8 to 10 nodes, an aggregation ring has 4 to 8 nodes, and a core ring has 4 to 8 nodes. In the IP backbone network, the traffic also needs to go through multiple router nodes. Meanwhile, due to the requirements of network slicing, highly reliable service-level agreement (SLA) and the controllability and manageability, operator networks should be able to specify an explicit path, in which an end-to-end SR tunnel may experience 10 or more hops. As a result, most domestic and overseas operators which deploy MPLS-SR require support for at least 8 layers of SID labels.

Conventionally, SRv6 solutions are based on SRH which has an SID length of 128 bits. The SID being 8 layered would result in an overhead of 128 bytes for a message. Relative to an application payload with an average length of 256 bytes, the overhead incurred by SRv6 is more than 1/3, and the bandwidth utilization drops below 67%. In contrast, in the same scenario, the overhead incurred by SR-MPLS is merely 32 bytes, and the bandwidth utilization is still 89%. Fig. 2 illustrates a comparative analysis of SRv6 and SR-MPLS in terms of bearer efficiency when the SID count ranges from 1 to 10 (only the overheads of SRH and SR-MPLS SID are briefly compared).

The increase in overhead, on one hand, lowers the network utilization, and on the other hand, brings a greater challenge to the support for deep message deep load balancing, in-band telemetry, and network service header (NSH).

Additionally, the SRv6 deployment is bound to coexist with SR-MPLS networks. Due to the difference in network utilization, imbalance of interfaces at network boundary may result, leading to waste of investment. In case of 100G link, 256-byte message and 8 layers of SIDs, when an SR-MPLS network domain interfaces with an SRv6 network domain, to match one 100GE link of the SR-MPLS domain, two 100GE links of the SRv6 domain are required due to the significant difference in link utilization. When applied in a carrier, SRv6 requires a network chip to insert into the message a field of a length of more than 128 bytes, which is equivalent to an MPLS-SR label depth of 32 layers and beyond the capability of deployed network chips. If a loopback-based solution is adopted in the chip, network performance will be significantly degraded, and more latencies and jitters will be introduced. As for a re-designed network chip, in order to support SRv6, the internal processing bus bandwidth has to be further enlarged. However, the internal processing bus bandwidth is the key factor in deciding chip cost and power consumption.

For an intermediate node, SRv6 requires a network chip to read the whole SRH, and then, according to the position pointed to by a pointer, extract and forward a to-be-processed segment. Compared with MPLS-SR in which only the outermost layer of label needs to be read, more complexity is introduced, which further increase the processing latency of network chip.

Low power consumption and low latency are essential properties for carrier's 5G solutions. The increase in power consumption, cost and latency resulting from the complexity of SRv6 brings challenge to its applications.

According to the above analysis, the SRv6 in the related art suffers from large message overhead, complex network chip and difficulty in seamless upgrade, and thus it is difficult to quickly deploy it in carrier networks. There is a need for further evolvement on the basis of SRv6 technique.

### SUMMARY

An object of embodiments of the present disclosure is to provide a method for processing a segment ID and an apparatus, to solve the problem in the related art that SRv6 suffers from large message overhead.

In a first aspect, an embodiment of the present disclosure provides a method for processing a segment ID, applied to a first node, including:
assigning a globally unique index to the first node; and
sending first information and/or second information of the first node to one or more second nodes in a network,
wherein the first information of the first node includes a locator of the first node and the corresponding index of the first node, and the second information of the first node includes a value of a function of the first node and the index of the first node.

Optionally, the sending the first information and/or second information of the first node to the one or more second nodes in the network includes:
sending, through a control protocol, the first information and/or second information of the first node to the one or more second nodes in the network.

Optionally, the method further includes:
receiving third information and/or fourth information of the one or more second nodes,
wherein the third information of the second node includes a locator of the second node and a corresponding index of the second node, and the fourth information of the second node includes a value of a function of the second node and the index of the second node.

Optionally, the method further includes:
generating a segment list according to a sequence of nodes through which a message passes and the second information and/or fourth information, wherein the segment list includes unified segment identifier USID information of the nodes through which the message passes, the USID information including a value of a function and an index; and
encapsulating the segment list into the message.

Optionally, the method further includes:
determining, according to the USID information in the segment list, an index and a value of a function of a node immediately following the first node;
generating a destination address in a header of the message according to the index and the value of the function; and
sending, according to the destination address, the message to the node immediately following the first node.

Optionally, the method further includes:
receiving a message from a node immediately preceding the first node; and
processing the message according to a value of a function and an index of the USID information to which the segment list in the message currently points, in case that a destination address in a header of the message matches the locator of the first node.

Optionally, the method further includes:
sending the message to a node immediately following the first node according to a preset routing rule, in case that the destination address in the header of the message does not match the locator of the first node.

Optionally, the second information and/or fourth information further includes:
indication information for indicating whether a function in an extended mode is used.

Optionally, the indication information is located in a reserved bit of a field of the index, or located in a reserved bit of a field of the function.

Optionally, the index of the second information and/or an index of fourth information is further used for indicating whether a function in an extended mode is used.

In a second aspect, an embodiment of the present disclosure provides a node, including:
an assignment module, configured to assign a globally unique index to the first node; and
a first sending module, configured to send first information and/or second information of the first node to one or more second nodes in a network,
wherein the first information of the first node includes a locator of the first node and the corresponding index of the first node, and the second information of the first node includes a value of a function of the first node and the index of the first node.

In a third aspect, an embodiment of the present disclosure provides a node, including: a transceiver and a processor,
wherein the processor is configured to assign a globally unique index to the first node; and
the transceiver is configured to send first information and/or second information of the first node to one or more second nodes in a network,
wherein the first information of the first node includes a locator of the first node and the corresponding index of the first node, and the second information of the first node includes a value of a function of the first node and the index of the first node.

In a fourth aspect, an embodiment of the present disclosure provides a communication apparatus, including a processor, a memory and a program stored in the memory and executable by the processor, wherein the processor is configured to execute the program, to implement the steps of the method for processing the segment identifier as described in the first aspect.

In a fifth aspect, an embodiment of the present disclosure provides a computer readable storage medium storing thereon a computer program, wherein the computer program is configured to be executed by a processor, to implement the steps of the method for processing the segment identifier as described in the first aspect.

In embodiments of the present disclosure, a node is assigned a globally unique index, and then the locator of the node and the corresponding index and/or a value of a function of the node and the index are informed to other nodes in the network. In this way, USID information in a message only needs to include the value of the function and the index. Having received a message, another node in the network may determine the corresponding index according to a mapping between locator and index, and if it is determined that the index in the message corresponds to the node, the node may perform processing on the traffic according to the value of the function in the message, thereby effectively reducing message overhead and complexity of network chip, realizing seamless system upgrade, and enabling fast deployment of SRv6 in carrier networks.

### BRIEF DESCRIPTION OF THE DRAWINGS

Having read detailed description of optional implementations of the present disclosure set forth below, a person of ordinary skill in the art would easily recognize various additional advantages and benefits. The accompanying drawings are merely for the purpose of illustrating optional implementations of the present disclosure, and are not intended to be construed as a limitation on the present disclosure. The same reference character is used to designate identical components throughout the drawings. In the drawings:
Fig. 1 is a schematic diagram showing an SRv6 SID;
Fig. 2 is a schematic diagram showing a comparative analysis of SR bearer efficiencies for different SID quantities when the payload length is 256 bytes;
Fig. 3 is a flow diagram of a method for processing a segment ID according to an embodiment of the present disclosure;
Fig. 4 is a schematic diagram showing four 32-bit USIDs according to an embodiment of the present disclosure;
Fig. 5 is a schematic diagram showing a mapping between an index in the USID according to an embodiment of the present disclosure and a locator in an SID in the prior art;
Fig. 6 is a schematic diagram of endpoint function types according to an embodiment of the present disclosure;
Fig. 7 is a schematic diagram of a function extension according to an embodiment of the present disclosure;
Fig. 8 is another schematic diagram of a function extension according to an embodiment of the present disclosure;
Fig. 9 is a schematic diagram of VPN traffic forwarding based on SRv6 USID TE according to an embodiment of the present disclosure;
Fig. 10 is a schematic diagram of USID index information of the node B in Fig. 9;
Fig. 11 is a schematic diagram of USID information of the node B in Fig. 9;
Fig. 12 is a schematic diagram of USID index information of the node E in Fig. 9;
Figs. 13 and 14 are schematic diagrams of USID information of the node E in Fig. 9;
Fig. 15 is a schematic diagram showing an index mapping relationship between the nodes in Fig. 9;
Fig. 16 is a schematic diagram of a USID list in the segment list of Fig. 9;
Figs. 17 to 19 are schematic diagrams of USIDs of the nodes in Fig. 9;
Fig. 20 is a schematic diagram of a node according to an embodiment of the present disclosure;
Fig. 21 is another schematic diagram of a node according to an embodiment of the present disclosure;
Fig. 22 is a schematic diagram of a communication apparatus according to an embodiment of the present disclosure.

### DETAILED DESCRIPTION

In the following, technical solutions in embodiments of the present disclosure will be described in a clear and complete manner with reference to the drawings related to the embodiments. Obviously, the described embodiments are merely a part of, rather than all of, the embodiments of the present disclosure. Based on the embodiments of the present disclosure, a person skilled in the art may, without any creative effort, obtain other embodiments, which also fall within the scope of the present disclosure.

Terms "include", "comprise" and any variant thereof in the description and claims of the present disclosure are intended to cover nonexclusive inclusions. For example, a process, method, system, product or equipment including a series of steps or units is not limited to those steps or units which are clearly listed, but may include other steps or units which are not clearly listed or intrinsic to the process, the method, the product or the equipment. In addition, the term "and/or" as used in the description and claims refers to at least one of objects connected by the term. For example, A and/or B may represent three possibilities: only A exists, only B exists, and both A and B exist.

In embodiments of the present disclosure, the word "exemplary" or "for example" or the like is used for meaning examples, example illustration or illustration. Any embodiment or design solution described as "exemplary" or "for example" in the embodiments of the present application should not be construed as being more preferred or advantageous than other embodiments or design solutions. To be specific, the word "exemplary" or "for example" or the like is intended to present related concepts in a specific manner.

Techniques described herein are not limited to 5^{th} Generation (5G) systems and subsequent evolved communication systems, and are not limited to LTE/LTE-Advanced (LTE-A) systems. They can be utilized in various wireless communication systems, such as Code Division Multiple Access (CDMA), Time Division Multiple Access (TDMA), Frequency Division Multiple Access (FDMA), Orthogonal Frequency Division Multiple Access (OFDMA), Single-Carrier Frequency-Division Multiple Access (SC-FDMA) and other systems.

The terms "system" and "network" are often interchangeable herein. A CDMA system can implement radio technologies such as CDMA2000 or Universal Terrestrial Radio Access (UTRA). UTRA includes Wideband Code Division Multiple Access (WCDMA) and other CDMA variants. A TDMA system can implement radio technologies such as Global System for Mobile communication (GSM). An OFDMA system can implement radio technologies such as Ultra Mobile Broadband (UMB), Evolved UTRA (E-UTRA), IEEE 802.11 (Wi-Fi), IEEE 802.16 (WiMAX), IEEE 802.20, or Flash-OFDM. Both UTRA and E-UTRA are a part of Universal Mobile Telecommunication System (UMTS). LTE and more advanced LTE (e.g., LTE-A) are new UMTS versions using E-UTRA. UTRA, E-UTRA, UMTS, LTE, LTE-A and GSM are described in the literatures of an organization named "3^{rd} Generation Partnership Project (3GPP)". CDMA2000 and UMB are described in the literatures of an organization named "3^{rd} Generation Partnership Project 2 (3GPP2)". Techniques described herein can be used in the aforementioned systems and radio technologies, and can be used in other systems and radio technologies as well.

Referring to Fig. 1, an embodiment of the present disclosure provides a method for processing a segment ID, and the method may be performed by a first node. For example, the first node may be an ingress node, an intermediate node, or an egress node of a network. The method includes a step 301 and a step 302.

Step 301: assigning a globally unique index to the first node;
optionally, the globally unique index is assigned to the first node according to a locator of the first node, wherein the locator of the first node may be an IP address of the first node or a device ID of the first node, but the present disclosure is not limited thereto.

For example, the IP address of the first node may be an IPv6 prefix of the first node, but the present disclosure is not limited thereto.

Step 302: sending first information and/or second information of the first node to one or more second nodes in a network;
wherein the first information of the first node includes a locator of the first node and the corresponding index of the first node, and the second information of the first node includes a value of a function of the first node and the index of the first node.

The index is used for identifying a network location, the function is used for identifying the programmability of the node, and different values of the function correspond to different respective service behaviors.

In embodiments of the present disclosure, USID (aka. Uni-SID) refers to a unified SID, namely, unified segment identifier. The first information of the first node may also be referred to as USID index information of the first node, and the second information of the first node may also be referred to as USID information of the first node.

For example, the first information and/or second information of the first node is sent, through a control protocol, to one or more second nodes in the network. The control protocol includes, but is not limited to: an interior gateway protocol (IGP), a border gateway protocol (BGP) or the like.

For example, the "function" field of the first node has a length of 12 bits, the "index" field has a length of 20 bits, then the USID information of the first node has a length of 32 bits, which can effectively reducing message (e.g., SRv6 message) overhead.

In an embodiment of the present disclosure, optionally, the method further includes:
receiving third information (or referred to as USID index information of the second node) and/or fourth information (or referred to as USID information of the second node) of the one or more second nodes,
wherein the third information of the second node includes a locator of the second node and a corresponding index of the second node, and the fourth information of the second node includes a value of a function of the second node and the index of the second node;
the index of the second node is assigned by the second node according to the locator of the second node, e.g., the index of the second node may be assigned by the second node according to the IP address (IPv6 prefix) of the second node.

In an embodiment of the present disclosure, optionally, the method further includes:
generating a segment list according to a sequence of nodes through which a message passes and the second information and/or fourth information (or referred to as USID information of the first node and/or USID information of the second node), wherein the segment list includes USID information of the nodes through which the message passes; and encapsulating the segment list into the message.

Optionally, the message may be an IPv6 message, but the present disclosure is not limited thereto.

In an embodiment of the present disclosure, optionally, the method further includes:
determining, according to the USID information in the segment list, an index and a value of a function of a node immediately following the first node, the USID information including an index and a value of a function;
generating a destination address in a header of the message according to the index and the value of the function of the node immediately following the first node; and
sending, according to the destination address, the message to the node immediately following the first node.

In an embodiment of the present disclosure, optionally, the method further includes:
receiving a message from a node immediately preceding the first node; and
processing the message according to the function and the index of the USID information to which the segment list in the message currently points, in case that a destination address in a header of the message matches the locator (e.g., IPv6 prefix) of the first node.

In an embodiment of the present disclosure, optionally, the method further includes:
sending the message to a node immediately following the first node according to a preset routing rule, in case that the destination address in the header of the message does not match the locator(e.g., IPv6 prefix) of the first node.

In an embodiment of the present disclosure, optionally, the second information and/or fourth information (or referred to as USID information of the first node and/or USID information of the second node) further includes: indication information for indicating whether a function in an extended mode is used.

Further, the indication information is located in a reserved bit (e.g., the least-significant reserved bit) of a field of the index, or located in a reserved bit (e.g., the most-significant reserved bit) of a field of the function.

In an embodiment of the present disclosure, optionally, the index of the second information and/or fourth information (or referred to as USID information of the first node and/or USID information of the second node) is further used for indicating whether a function in an extended mode is used.

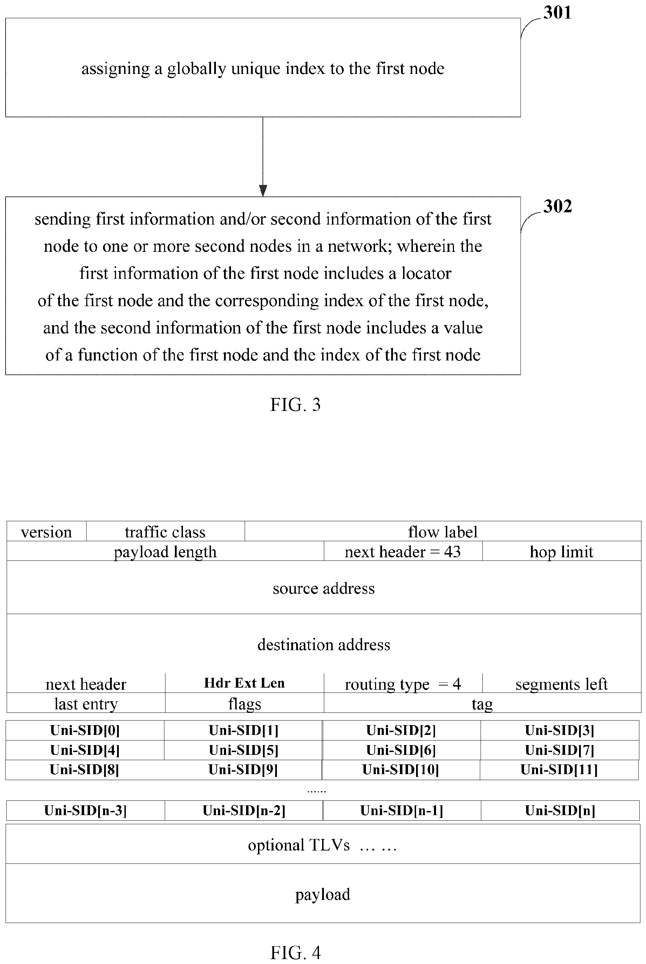

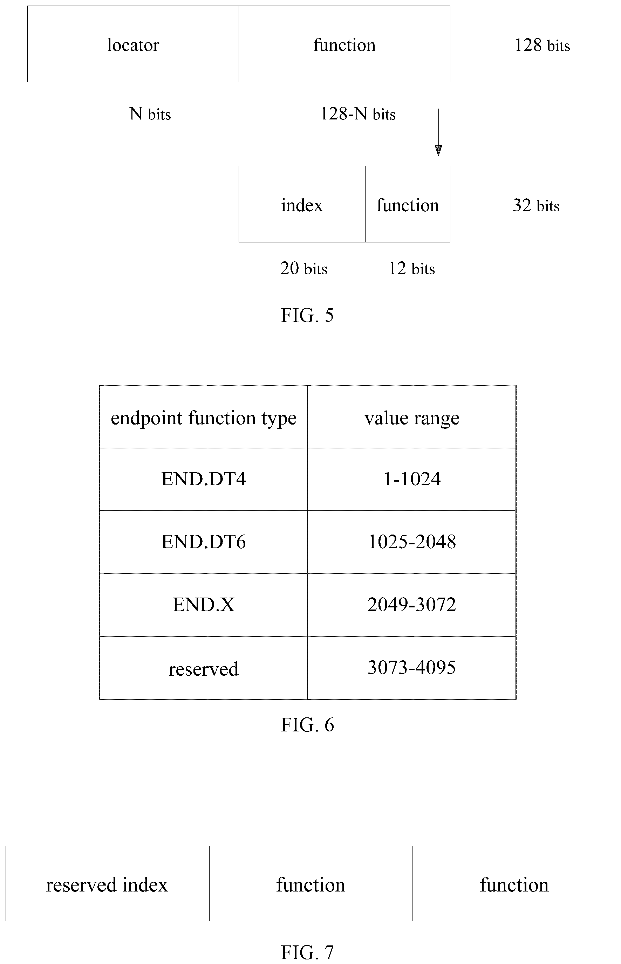

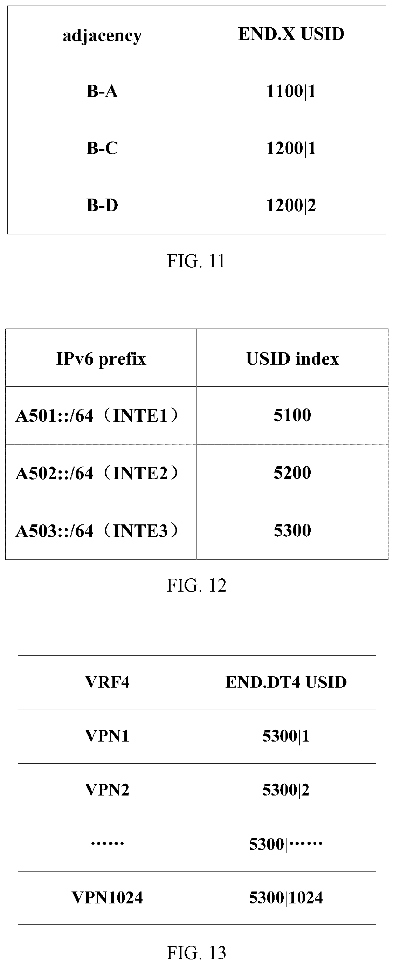

Optionally, the second information and/or fourth information (or referred to as USID information of the first node and/or USID information of the second node) has a base length of 32 bits, thereby effectively reducing the SID space occupation, inheriting the locator and function structures of a standard SID, and having the following correspondence relationship with SRv6 SID in related standards.
1) Each 128-bit space are divided into four 32-bit USIDs, as shown in Fig. 4.
   Next Header: it denotes the type of message header immediately following the SRH
   Hdr Ext len: SRH header length. It mainly refers to a length occupied by Segment List[0] to Segment List[n].
   Routing Type: it denotes a routing header type, and SRH type is 4.
   Segment Left: quantities of intermediate nodes to be visited before the destination node is reached.
   Last Entry: an index in the segment list that includes the last element of the segment list.
   Flags: some identifiers of data packets.
   Tag: it denotes data packets in the same group.
   Segment List[n]: segment list, wherein the segment list is encoded from the last segment of the path.
   Optional TLV: TLV portion with a variable length.
2) There is a mapping relationship between an index and a locator, as shown in Fig. 5, a 20-bit index may be mapped to at most a 128-bit locator.
   In an embodiment of the present disclosure, each index value denotes one locator. For example, a 20-bit index field may denote 2²⁰ locators. Since the indexes cannot be aggregated in form of an organization of addresses, a detailed mapping table needs to be transmitted, thus the quantity of information transmitted according to protocol is large and query of mapping table is frequent.
3) Since the function field of USID has a length less than that of the standard SID, as shown in Fig. 5, and 12 bits cannot completely correspond to currently defined types (referring to draft-ietf-spring-srv6-network-programming-07 Section9.2.1), at least the basic function capabilities of END.DT4, END.DT6 and END.DT46 are enabled according to available space. Meanwhile, in order to support traffic engineering (TE), END.X needs to be enabled. As in the example shown in Fig. 6, different ranges of numerical values represent aforementioned different endpoint behavior types, respectively. It is understood that Fig. 6 is merely given as an example, and the nodes in the network may define the meanings of the function values voluntarily.

It is noted, the occupation lengths of index and function described above with respect to the compressed length of USID are merely exemplary, and occupation lengths of index and function are not limited in embodiments of the present disclosure.

In embodiments of the present disclosure, the function in USID may completely inherit the definition in the draft-ietf-spring-srv6-network-programming-07 Section 4, but the present disclosure is not limited thereto.

In embodiments of the present disclosure, a node may be assigned a globally unique index, and then the locator (e.g., IPv6 prefix) of the node and the index and/or a value of a function of the node and the index are informed to other nodes in the network. In this way, USID information in a message only needs to include the value of the function and the index. Having received the message, another node in the network may determine the corresponding index according to a mapping between locator and index, and if it is determined that the index in the message corresponds to the node, the node may perform corresponding processing on the traffic according to the value of the function in the message, thereby effectively reducing message overhead and complexity of network chip, realizing seamless system upgrade, and enabling fast deployment of SRv6 in carrier networks.

Taking one 32-bit USID for example, the function field has a base length of 12 bits. According to the scale of conventional network deployment, the function field may be used for basic endpoint functions such as END.X, END.DT4, END.DT6 and END.DT46.

Due to space limitation, other functions such as END.DX4 and END.DX6 can not be expressed. In order to support complete functions, the function part of USID needs to support flexible extension, in other words, one 32-bit USID may be extended to achieve the effect of splicing two USIDs, wherein 20 bits are used as index and the total length of function may reach 44 bits. However, it is necessary to indicate in USID whether a function in an extended mode is used, so that the apparatus may be aware during data forwarding.

For example, the extended mode may be indicated in the following two manners.
1) Reserved index, wherein a special index value is used to denote that the instant 32-bit USID is to be merged with the next 32-bit USID to form a valid USID.
   Referring to Fig. 7, for example, the entire USID information following the instant USID information is regarded as the function and is merged into the instant USID information, meanwhile the index of the instant USID remains unchanged, and the function part of the instant USID + the newly merged entire USID information as a whole serve as a new function part. In this way, the chip forwarding may reuse implementations of existing method of reserving MPLS label.
2) 1-bit flag is reserved at the least-significant bit of the index field or at the most-significant bit of the function field to indicate whether USID is in the extended mode.

In other words, the extended mode is identified by adding a new flag.

For example, in the generating mechanism of SRv6 USID, a native SRv6 locator needs to be assigned a unique index value, that is, the index serves as a label value and forms a 1:1 mapping relationship with the locator.

The control protocol such as ISIS6 and OSPFv3 extends sub TLV flooding protocol information, and carries a mapping relationship between index and IPv6 prefix. In this way, all network nodes in the same network may generate a mapping table of IPv6 prefixes and indexes. It differs from the SR MPLS technique in that the USID only assigns an index for IPv6 prefix, and does not assign an adjacency index for an adjacent link any longer, instead it indicates with the END.X function.

A network node having SRv6 USID deployed assigns a globally unique index value to its IPv6 prefix (including, but not limited to IPv6 prefixes of a normal interface and a loopback interface), and sends the index value to other network nodes through a control protocol such as IGP/BGP. All nodes in the network may obtain the mapping relationship between the IPv6 prefix and the index, and form a mapping table between IPv6 prefixes and indexes.

At the same time, in order to realize the endpoint functions, the network node having SRv6 USID deployed also assigns a function value to a specified function, and sends the endpoint function and a corresponding END USID to other network nodes through the control protocol such as IGP/BGP. The value of function is different from the value of index, and is only recognizable to endpoints of the traffic (generally, the ingress node and the egress node of the network) and is merely transmitted on other intermediate nodes.

When the ingress node of the network encapsulates with SRv6 USID, the ingress node queries the mapping table according to the egress IPv6 address to obtain a corresponding index value, queries for a corresponding function value according to END USID transmitted via IGP/BGP, and forms one USID according to the aforementioned combination of index: function. If a set of nodes though which the message passes is designated, then for each IPv6 prefix of the set, the ingress node queries the mapping table and forms one USID from each corresponding index value, wherein the function field is set to 0. If a set of links though which the message passes is designated, then for each IPv6 address of link starting point of the set, the ingress node queries the mapping table to obtain a corresponding index value, meanwhile queries for a corresponding link function value according to END USID transmitted via IGP, and forms one USID according to the aforementioned combination of index: function.

The ingress node of the network forms a USID list by arranging the USIDs in an inverted sequence of passing through corresponding nodes, and encapsulates the USID list into the segment list at the IPv6 SRH header of the message. That is, the USID of the egress node is the first USID in the list, the USID of the first node or link in the specified path is the last USID in the list, and the USID currently pointed to is the last USID, which is exactly the same mode as that adopted by the native SRv6. The index of the USID currently pointed to is mapped to the corresponding IPv6 prefix, and 12 less significant bits of the IPv6 address are populated with the function value of the USID, to form the destination address in the IPv6 header.

When the message is forwarded in the network, each node checks whether its address matches the IPv6 destination address. If not, then the node forwards the message according to the IPv6 routing table; and if so, the node needs to process the USID to which the segment list in the IPv6 SRH header currently points, query for the corresponding IPv6 prefix according to the index, and perform, according to the function value, corresponding service processing, e.g., look for a designated link to forward, look for a routing table corresponding to virtual routing and forwarding (VRF) to forward, or the like, meanwhile, the node moves forward the USID pointer of the segment list by one USID, and maps the index of the new USID to the corresponding IPv6 prefix and populates the function value of the USID into 12 less significant bits of the IPv6 address to form the destination address in the new IPv6 header.

The message is continuously forwarded, and the above process is repeated, until the service processing of the first USID in the segment list, i.e., the USID of the egress node, is completed.

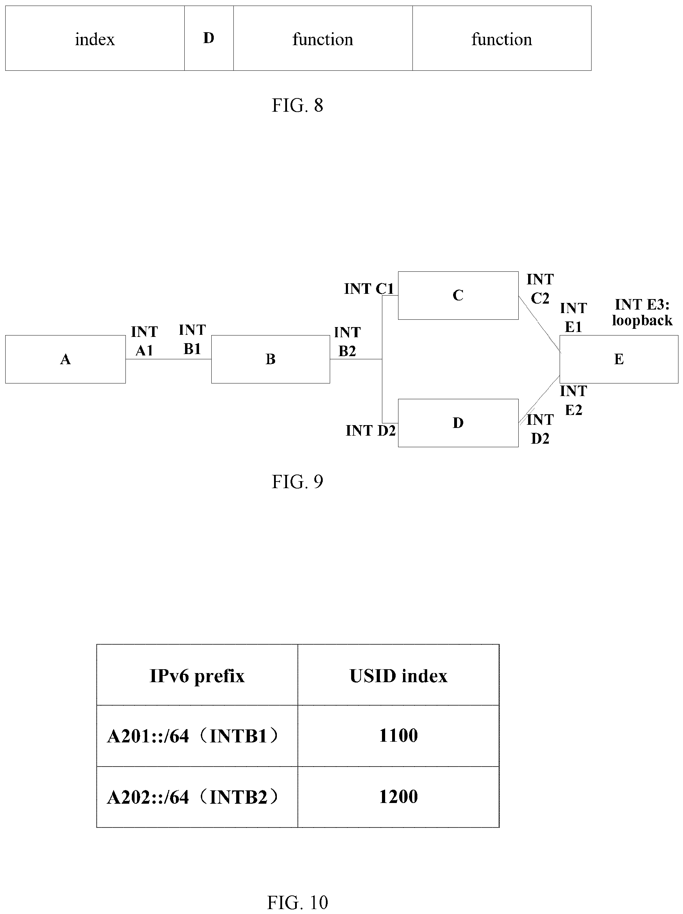

The following describes, with reference to Fig. 9, an optional implementation according to the foregoing process.

The USID has a base length of 32 bits, the function field has a base length of 12 bits, all IPv6 prefixes are 64 bits in length, a minimum set of END X/END.DT4/END.DT6 is adopted for the END function, and a node A and a node E deploy L3VPN IPv4 and IPv6, and perform VPN traffic forwarding based on SRv6 USID TE.

Referring to Fig. 10 and Fig. 11, the USID index information and END USID information of a node B may be flooded to the nodes A, C, D, and E through IGP (including, but not limited to ISIS6, OSPFv3) protocol extended Sub TLV.

For example, INTB2 of the node B is one LAN interface, and there are two neighbors C and D, then index=1200 is used to represent the IPv6 prefix configured by the INTB2, function=1 is used to represent the message is forwarded to the node C, and function=2 is used to represent the message is forwarded to the node D.

The USID index information and END USID information of the node E are as shown in Figs. 12, 13 and 14, wherein the index mapping relationship may be flooded through IGP (including, but not limited to ISIS6, OSPFv3) extended Sub TLV, the END.DT4 USID and the END.DT6 USID can be passed to the BGP VPN peer node A though BGP (including, but not limited to VPNv4, VPNv6, EVPN address family or the like) protocol extended attributes, and then may be RT cross-matched with various VPNs to obtain function value in the corresponding USID.

For example, INTE3 of the node E is a loopback interface, and may serve as an address for establishing BGP VPN peer with the node A, the next hop of the VPN routing queried by the node A is the IPv6 address of the INTE3, which is represented by index=5300; the VPN service of the node E has 1K VPNv4s and 1K VPNv6s, which are denoted by function values 1-1024 and 1025-2048, respectively.

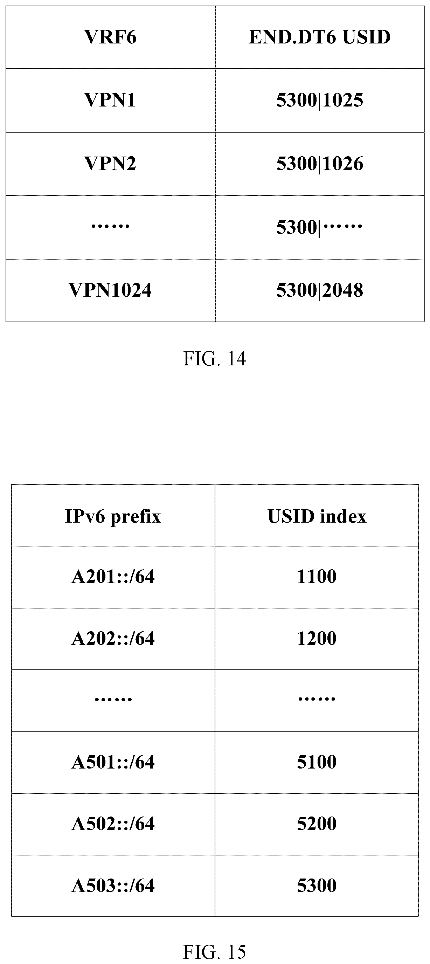

According to the publishing process of aforementioned protocols, the nodes A to E all can form the index mapping table as shown in Fig. 15 for query (in Fig. 15, only the index mapping relationships of the nodes B and E are illustrated).

If it is necessary to send IPv4-VPN2 traffic from the node A, it is queried that the next hop of the destination address of the VPN2 routing table is the node E, and the VPN2 traffic needs to go through the link B-C, then following operations need to be done.

First, a mapping table is queried, the IPv6 prefix of the loopback interface of the node E corresponds to index=5300, meanwhile according to the BGP extended attribute, a cross-match with VPN2 is performed to obtain corresponding function=2, thereby forming the first USID1=5300 | 2.

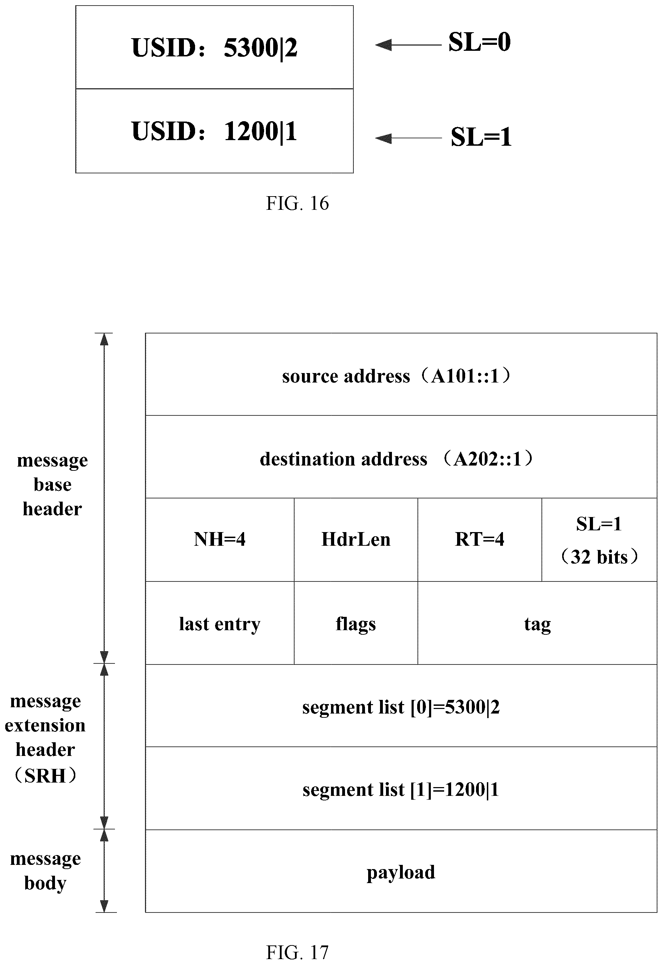

Next, it is queried that the IPv6 prefix of the starting point INTB2 interface of the link B-C corresponds to index=1200, meanwhile it is queried that the END.X SID function corresponding to the link B-C=1, thereby forming the second, i.e., the last, USID2=1200 | 1. The USID list in the segment list is as shown in Fig. 16.

It is noted, the meaning of the Segment Left (SL) in the draft-ietf-6man-segment-routing-header-26 is altered, such that the length of each segment is changed from the fixed 128 bits of IPv6 address to the base length of 32 bits of USID.

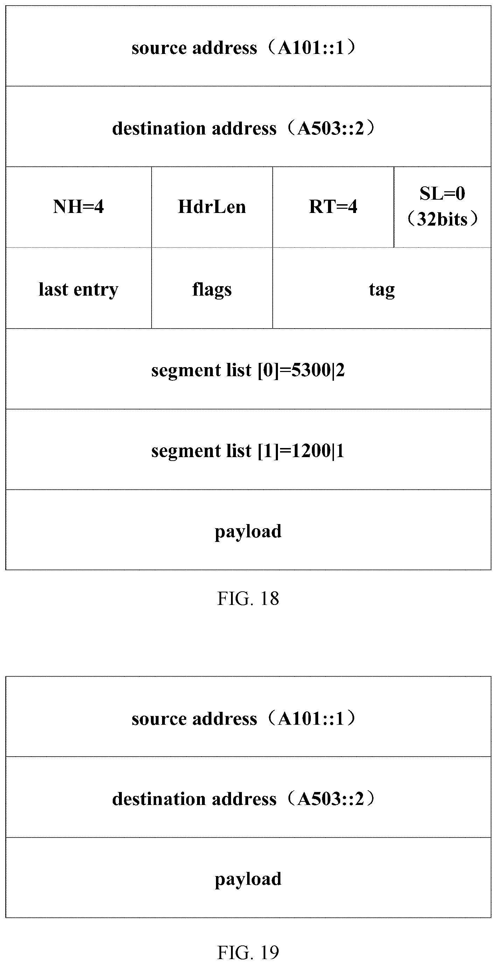

Referring to Fig. 9 and Figs. 17 to 19, a forwarding process of a data message carrying an SRv6 USID is as follows:
1) node A segment list=<USID1=5300 | 2, USID2=1200 | 1>, wherein the IPv6 prefix corresponding to the USID2 index=1200 is A202::/64, and function=1 is populated to the least-significant bit, forming the IPv6 destination address A202::1 for forwarding, then the destination address is forwarded to the node B by querying the IPv6 routing table;
2) the node B determines that the IPv6 destination address A202::1 matches its address, processes USID2=1200 | 1 to which the SL points, and according to index=1200, finds out the corresponding IPv6 prefix is the INTB2 interface, function=1 refers to the link B-C, then the node B forwards the message according to the link B-C, meanwhile the SL pointer moves to USID1, the node B queries that the IPv6 prefix corresponding to USID1 index=5300 is A503::/64, and function=2 is populated to the least-significant bit, forming a new IPv6 destination address A503::2 for further forwarding;
3) the node C determines that the IPv6 destination address A503::2 does not match its address, and query its IPv6 routing table to continue forwarding to the node E;
4) the node E determines that the IPv6 destination address A503::2 matches its address, processes USID1=5300 | 2 to which the SL points, and according to index=5300, finds out the corresponding IPv6 prefix is the INTE3 interface, i.e., the loopback interface establishing the BGP VPN peer, function=2 refers to VPN2, meanwhile, since SL=0 means that the first USID1 has already been pointed to, the entire IPv6 SRH header needs to be ejected, and the payload part of the message is forwarded continuously according to the routing table of VPN2.

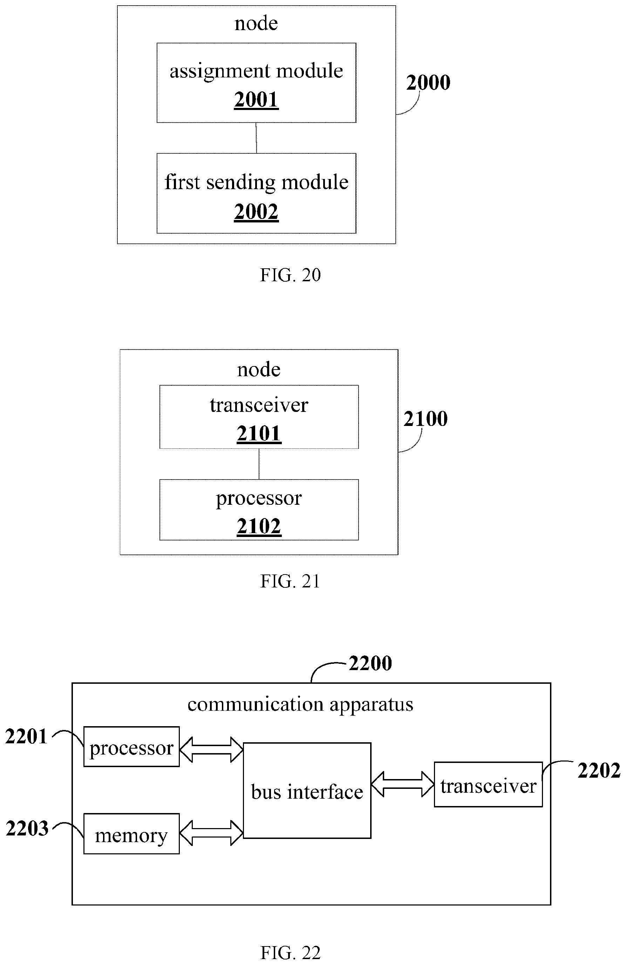

Referring to Fig. 20, an embodiment of the present disclosure further provides a node, the node 2000 being a first node. The node 2000 includes:
an assignment module 2001, configured to assign a globally unique index to the first node; optionally, the assignment module 2001 assigns the globally unique index to the first node according to the locator(e.g., IPv6 prefix) of the first node; and
a first sending module 2002, configured to send first information (or referred to as USID index information) and/or second information (or referred to as USID information) of the first node to one or more second nodes in a network,
wherein the first information of the first node includes a locator of the first node and the corresponding index of the first node, and the second information of the first node includes a function of the first node and the index of the first node.

In an embodiment of the present disclosure, the first sending module 2002 is further configured to send, through a control protocol, the first information (or referred to as USID index information) and/or second information (or referred to as USID information) of the first node to the one or more second nodes in the network.

In an embodiment of the present disclosure, the node 2000 further includes:
a first receiving module, configured to receive third information (or referred to as USID index information of the second node) and/or fourth information (or referred to as USID information of the second node) of the one or more second nodes,
wherein the third information of the second node includes a locator (e.g., IPv6 prefix) of the second node and a corresponding index of the second node, and the fourth information of the second node includes a function of the second node and the index of the second node; the index of the second node is assigned by the second node according to the locator (e.g., IPv6 prefix) of the second node.

In an embodiment of the present disclosure, the node 2000 further includes:
a first generating module, configured to generate a segment list according to a sequence of nodes through which a message passes and the second information and/or fourth information (or referred to as USID information of the first node and/or USID information of the second node), wherein the segment list includes USID information of the nodes through which the message passes; and
an encapsulation module, configured to encapsulate the segment list into the message.

In an embodiment of the present disclosure, the node 2000 further includes:
a determination module, configured to determine, according to the USID information in the segment list, an index and a value of a function of a node immediately following the first node;
a second generating module, configured to generate a destination address in a header of the message according to the index and the value of the function; and
a second sending module, configured to send, according to the destination address, the message to the node immediately following the first node.

In an embodiment of the present disclosure, the node 2000 further includes:
a second receiving module, configured to receive a message from a node immediately preceding the first node; and
a second determination module, configured to process the message according to a function and an index of the USID information to which the segment list in the message currently points, in case that a destination address in a header of the message matches the locator (e.g., IPv6 prefix) of the first node.

In an embodiment of the present disclosure, the node 2000 further includes:
a third sending module, configured to send the message to a node immediately following the first node according to a preset routing rule, in case that the destination address in the header of the message does not match the locator (e.g., IPv6 prefix) of the first node.

In an embodiment of the present disclosure, the second information and/or fourth information (or referred to as USID information of the first node and/or USID information of the second node) further includes: indication information for indicating whether a function in an extended mode is used.

In an embodiment of the present disclosure, the indication information is located in a least-significant reserved bit of a field of the index, or located in a most-significant reserved bit of a field of the function.

In an embodiment of the present disclosure, the index of the second information and/or fourth information (or referred to as USID information of the first node and/or USID information of the second node) is further used for indicating whether a function in an extended mode is used.

The node according to the embodiment of the present disclosure may implement the method embodiment as shown in Fig. 3, and has similar implementation principle and technical effects. A detailed description thereof is omitted herein.

Referring to Fig. 21, an embodiment of the present disclosure further provides a node, the node 2100 being a first node. The node 2100 includes a transceiver 2101 and a processor 2102,
wherein the processor 2102 is configured to assign a globally unique index to the first node;
the transceiver 2101 is configured to send first information (or referred to as USID index information) and/or second information (or referred to as USID information) of the first node to one or more second nodes in a network,
wherein the first information of the first node includes a locator (e.g., IPv6 prefix) of the first node and the corresponding index of the first node, and the second information of the first node includes a function of the first node and the index of the first node.

In an embodiment of the present disclosure, the transceiver 2101 is further configured to receive third information (or referred to as USID index information of the second node) and/or fourth information (or referred to as USID information of the second node) of the one or more second nodes,
wherein the third information of the second node includes a locator (e.g., IPv6 prefix) of the second node and a corresponding index of the second node, and the fourth information of the second node includes a function of the second node and the index of the second node; the index of the second node is assigned by the second node according to the locator (e.g., IPv6 prefix) of the second node.

In an embodiment of the present disclosure, the processor 2102 is further configured to generate a segment list according to a sequence of nodes through which a message passes and the second information and/or fourth information (or referred to as USID information of the first node and/or USID information of the second node), wherein the segment list includes USID information of the nodes through which the message passes; and
the transceiver 2101 is configured to encapsulate the segment list into the message.

In an embodiment of the present disclosure, the processor 2102 is further configured to determine, according to the USID information in the segment list, a locator and an index of a node immediately following the first node;
the processor 2102 is further configured to generate a destination address in a header of the message according to the value of the function and the index; and
the transceiver 2101 is further configured to send, according to the destination address, the message to the node immediately following the first node.

In an embodiment of the present disclosure, the transceiver 2101 is further configured to receive a message from a node immediately preceding the first node; and
the processor 2102 is further configured to process the message according to a function and an index of the USID information to which the segment list in the message currently points, in case that a destination address in a header of the message matches the locator (e.g., IPv6 prefix) of the first node.

In an embodiment of the present disclosure, the transceiver 2101 is further configured to send the message to a node immediately following the first node according to a preset routing rule, in case that the destination address in the header of the message does not match the locator (e.g., IPv6 prefix) of the first node.

In an embodiment of the present disclosure, the second information and/or fourth information (or referred to as USID information of the first node and/or USID information of the second node) further includes: indication information for indicating whether a function in an extended mode is used.

In an embodiment of the present disclosure, the indication information is located in a least-significant reserved bit of a field of the index, or located in a most-significant reserved bit of a field of the function.

In an embodiment of the present disclosure, the index of the second information and/or fourth information (or referred to as USID information of the first node and/or USID information of the second node) is further used for indicating whether a function in an extended mode is used.

The node according to the embodiment of the present disclosure may implement the method embodiment as shown in Fig. 3, and has similar implementation principle and technical effects. A detailed description thereof is omitted herein.

Referring to Fig. 22, a structural diagram of a communication apparatus to which embodiments of the present disclosure are applied is illustrated. As shown in Fig. 22, the communication apparatus 2200 includes: a processor 2201, a transceiver 2202, a memory 2203 and a bus interface.

In an embodiment of the present disclosure, the communication apparatus 2200 further includes a computer program stored in the memory 2203 and executable by the processor 2201. When the computer program is executed by the processor 2201, steps of the method as shown in Fig. 3 are implemented.

In Fig. 22, a bus architecture may include any number of interconnected buses and bridges, and connects various circuits including one or more processors represented by the processor 2201 and memory represented by the memory 2203. The bus architecture may also connect various other circuits such as peripherals, voltage regulators and power management circuits, which is well known in the art. Therefore, a detailed description thereof is omitted herein. A bus interface provides interfaces. The transceiver 2202 may be multiple elements, that is, including a transmitter and a receiver, to provide a unit for communication with various other apparatuses on the transmission medium.

The processor 2201 is responsible for supervising the bus architecture and normal operation. The memory 2203 may store data being used by the processor 2201 during operation.

The communication apparatus according to some embodiments of the present disclosure may implement the method embodiment as shown in Fig. 3, and has similar implementation principle and technical effects, which are not described redundantly herein.

The steps of the method or algorithm described in the present disclosure may be implemented in form of hardware, or implemented in form of a software instruction executable by a processor. The software instruction may be composed of corresponding software modules, and the software modules may be stored in a random access memory (RAM), flash memory, read-only memory (ROM), erasable programmable ROM (EPROM), electrically erasable programmable ROM (EEPROM), register, hard disk, removable hard disk, read-only optical disc or any other form of storage medium well known in the art. An exemplary storage medium is coupled to a processor, so that the processor may read information from the storage medium and write information to storage medium. Certainly, the storage medium may be a part of the processor. The processor and the storage medium may reside in an application specific integrated circuit (ASIC). In addition, the ASIC may reside in a core network interface device. Certainly, the processor and the storage medium may also reside in the core network interface device as discrete components.

Persons skilled in the art would appreciate that, in the foregoing one or more examples, the functions described by the present disclosure may be implemented with hardware, software, firmware or any combination thereof. When being implemented with software, these functions may be stored in a computer readable medium or transmitted as one or more instructions or codes in a computer readable medium. The computer readable medium includes a computer storage medium and a communication medium. The communication medium includes any medium facilitating the transmission of a computer program from one place to another. The storage medium may be any available medium accessible by a general purpose computer or a special purpose computer.

The foregoing specific implementations further describe in detail the purpose, technical solution and beneficial effects of the present disclosure. It is understood, the above descriptions are merely specific implementations of the present disclosure, and are not intended to define the scope of the present disclosure. Any modifications, equivalent replacements or improvements made on the basis of the technical solution of the present disclosure shall fall within the scope of the present disclosure.

It is appreciated by a person skilled in the art that, embodiments of the present disclosure may be implemented as a method, system or computer program product. Therefore, embodiments of the present disclosure may take the form of a complete hardware embodiment, complete software embodiment or combination of hardware and software. Moreover, embodiments of the present disclosure may take the form of a computer program product embodied as one or more computer usable storage media (including, but not limited to, a magnetic disk storage, compact disc read-only memory (CD-ROM), optical storage or the like) storing therein computer usable program codes.

The embodiments of the present disclosure have been described with reference to flow diagrams and/or block diagrams of methods, devices (systems), and computer program products according to embodiments of the present disclosure. It will be understood that each flow and/or block of the flow diagrams and/or block diagrams, and combinations of flows and/or blocks in the flow diagrams and/or block diagrams, can be implemented by computer program instructions. These computer program instructions may be provided to a processor of a general purpose computer, special purpose computer, embedded processor, or other programmable data processing apparatus to produce a machine, such that the instructions, which are executed via the processor of the computer or other programmable data processing terminal device, create means for implementing the functions specified in one or more flows of the flow diagram and/or one or more blocks of the block diagram.

These computer program instructions may also be stored in a computer-readable storage that can direct a computer or other programmable data processing terminal device to function in a particular manner, such that the instructions stored in the computer-readable storage produce an article of manufacture including instruction means which implement the function specified in one or more flows of the flow diagram and/or one or more blocks of the block diagram.

The computer program instructions may also be loaded onto a computer or other programmable data processing device to cause a series of operational steps to be performed on the computer or other programmable device to produce a computer-implemented process, such that the instructions which are executed on the computer or other programmable device provide steps for implementing the functions specified in one or more flows of the flow diagram and/or one or more blocks of the block diagram.

If the functions are implemented in a form of a software functional unit and sold or used as an independent product, the functions may be stored in a computer-readable storage medium. Based on such an understanding, essential parts, or parts contributing to the related art, of the technical solution of the present disclosure may be implemented in form of a software product. The software product is stored in a storage medium, and includes several instructions for instructing a computer device (which may be a personal computer, a server, or a network device) to perform all or a part of the steps of the methods described in the embodiments of the disclosure. The foregoing storage medium includes any medium that can store program code, such as a universal serial bus (USB) flash drive, a removable hard disk, an ROM, an RAM, a magnetic disk, or an optical disc.

It is understood by a person of ordinary skill in the art that all or a part of the flows of the aforementioned methods may be implemented through hardware controlled by computer programs. The programs may be stored in a computer readable storage medium. The programs, when being executed, may include the flows of the embodiments of the aforementioned methods. Wherein the storage medium may be a magnetic disk, an optic disc, a ROM or a RAM, etc.

It may be understood that these embodiments described in this disclosure may be implemented by hardware, software, firmware, middleware, microcode or a combination thereof. For hardware implementation, a module, unit, sub-module, sub-unit may be implemented in one or more ASICs, a digital signal processor (DSP), a digital signal processing device (DSP device, DSPD), a programmable logic device (PLD), a field-programmable gate array (FPGA), a general-purpose processor, a controller, a microcontroller, a microprocessor, other electronic unit configured to perform the functions in the present disclosure or a combination thereof.

For a software implementation, the techniques in some embodiments of the present disclosure may be implemented by modules (for example, processes or functions) performing the functions described in some embodiments of the present disclosure. Software codes may be stored in a storage and executed by a processor. The storage may be implemented internal or external to a processor.

Obviously, modifications and variants of the embodiments of the present disclosure may be made by a person of ordinary skill in the art without departing from the principle of the present disclosure. Thus, if these modifications and variants of the embodiments of the present disclosure fall within the scope of the claims and their equivalents, the present disclosure is intended to encompass these modifications and variants.

## Claims

1. A method for processing a segment identifier, performed by a first node, comprising:
assigning a globally unique index to the first node; and
sending first information and/or second information of the first node to one or more second nodes in a network;
wherein the first information of the first node comprises a locator of the first node and the corresponding index of the first node, and the second information of the first node comprises a value of a function of the first node and the index of the first node.

2. The method according to claim 1, wherein the sending the first information and/or second information of the first node to the one or more second nodes in the network, comprises:
sending, through a control protocol, the first information and/or second information of the first node to the one or more second nodes in the network.

3. The method according to claim 1, further comprising:
receiving third information and/or fourth information of the one or more second nodes,
wherein the third information of the second node comprises a locator of the second node and a corresponding index of the second node, and the fourth information of the second node comprises a value of a function of the second node and the index of the second node.

4. The method according to claim 1 or 3, further comprising:
generating a segment list according to a sequence of nodes through which a message passes and the second information and/or fourth information, wherein the segment list comprises unified segment identifier USID information of the nodes through which the message passes, the USID information comprising a value of a function and an index; and
encapsulating the segment list into the message.

5. The method according to claim 4, further comprising:
determining, according to the USID information in the segment list, an index and a value of a function of a node immediately following the first node;
generating a destination address in a header of the message according to the index and the value of the function; and
sending, according to the destination address, the message to the node immediately following the first node.

6. The method according to claim 1 or 4, further comprising:
receiving a message from a node immediately preceding the first node; and
processing the message according to a value of a function and an index of the USID information to which the segment list in the message currently points, in case that a destination address in a header of the message matches the locator of the first node.

7. The method according to claim 6, further comprising:
sending the message to a node immediately following the first node according to a preset routing rule, in case that the destination address in the header of the message does not match the locator of the first node.

8. The method according to any one of claims 1 to 7, wherein the second information and/or fourth information further comprises:
indication information for indicating whether a function in an extended mode is used.

9. The method according to claim 8, wherein the indication information is located in a reserved bit of a field of the index, or located in a reserved bit of a field of the function.

10. The method according to any one of claims 1 to 7, wherein the index of the second information and/or an index of fourth information is further used for indicating whether a function in an extended mode is used.

11. Anode, the node being a first node, comprising:
an assignment module, configured to assign a globally unique index to the first node; and
a first sending module, configured to send USID index information and/or USID information of the first node to one or more second nodes in a network,
wherein the first information of the first node comprises a locator of the first node and the corresponding index of the first node, and the second information of the first node comprises a value of a function of the first node and the index of the first node.

12. A node, the node being a first node, comprising: a transceiver and a processor,
wherein the processor is configured to assign a globally unique index to the first node; and
the transceiver is configured to send first information and/or second information of the first node to one or more second nodes in a network,
wherein the first information of the first node comprises a locator of the first node and the corresponding index of the first node, and the second information of the first node comprises a value of a function of the first node and the index of the first node.

13. A communication apparatus, comprising a processor, a memory and a program stored in the memory and executable by the processor, wherein the processor is configured to execute the program, to implement the steps of the method for processing the segment identifier according to any one of claims 1 to 10.

14. A computer readable storage medium storing thereon a computer program, wherein the computer program is configured to be executed by a processor, to implement the steps of the method for processing the segment identifier according to any one of claims 1 to 10.
